# EUROPÄISCHE PATENTANMELDUNG

(11) **EP 0 841 033 A2**
(43) Veröffentlichungstag der Anmeldung: **13.05.1998**
(21) Anmeldenummer: 97115878.7
(22) Anmeldetag: 12.09.1997
(51) Int. Cl.: A47L 9/24

(54) **Teleskopierbares Saugrohr für Staubsauger**

(30) Priorität: 08.11.1996 DE 29619422 U
(71) Anmelder: AEG Hausgeräte GmbH, 90429 Nürnberg (DE)
(72) Erfinder: Schneider, Gottfried, 90765 Fürth (DE)

(57) **Zusammenfassung**

Teleskopierbares Saugrohr für Staubsauger, bestehend aus zwei ineinander verschiebbaren Rohren, wobei das Innenrohr mehrere in Achsrichtung voneinander beabstandete Rasteintiefungen aufweist, in die zum Arretieren der Rohre zueinander unter Betätigung eines am Außenrohr angeordneten Handhabungselements ein Rastelement lösbar einrastbar ist, wobei das Handhabungselement am Außenrohr gegen die Wirkung einer Rückstellkraft derart hebelartig schwenkbar angeordnet ist, daß das am Handhabungselement angeordnete Rastelement bei Betätigung des Handhabungselements reversibel zwischen einer Rast- und einer Lösestellung bewegbar ist.

## Beschreibung

Die Erfindung betrifft ein teleskopierbares Saugrohr für Staubsauger, bestehend aus zwei ineinander verschiebbaren Rohren, wobei das Innenrohr mehrere in Achsrichtung voneinander beabstandete Rasteintiefungen aufweist, in die zum Arretieren der Rohre zueinander unter Betätigung eines am Außenrohr angeordneten Handhabungselements ein Rastelement lösbar einrastbar ist.

Ein derartiges Saugrohr ist beispielsweise aus DE 195 24 290 C1 bekannt. Die Teleskopierbarkeit unter gleichzeitiger Verrastung der einzelnen Rohrstellungen zueinander wird mittels eines walzenförmigen Rastelements ermöglicht, welches in geeignete Rasteintiefungen am Innenrohr einrastbar ist. Um ein Verschieben der Rohre zueinander zu ermöglichen, ist ein Handhabungselement in Form eines am Außenrohr angebrachten Schiebers, welcher gegen die Wirkung einer Feder verspannbar ist, vorgesehen. Um das Rastelement aus seinem Rasteingriff zu bringen, muß der Schieber betätigt werden, so daß ein Freiraum oberhalb vom Rastelement geschaffen wird, in welches dieses ausrücken kann. Nachteilig bei diesem Saugrohr ist der komplette äußerst aufwendige Aufbau, da dieser einerseits eine Vielzahl von Elementen, nämlich das separate Rastelement, die Feder, und die sich ebenfalls aus mehreren Teilen zusammensetzende Schiebermimik umfaßt. Darüber hinaus ist auch die gesamte Halterung am Außenrohr äußerst kompliziert und insbesondere aus fertigungstechnischer Hinsicht unvorteilhaft.

Der Erfindung liegt damit das Problem zugrunde, eine teleskopierbares Saugrohr anzugeben, welches in seinem Aufbau äußerst einfach gestaltet ist bei gleichzeitiger einfacher Handhabung und Gewährleistung einer sicheren Verrastung der Einzelstellungen.

Zur Lösung dieses Problems ist bei einem Saugrohr der eingangs genannten Art erfindungsgemäß vorgesehen, daß das Handhabungselement am Außenrohr gegen die Wirkung einer Rückstellkraft derart hebelartig schwenkbar angeordnet ist, daß das am Handhabungselement angeordnete Rastelement bei Betätigung des Handhabungselements reversibel zwischen einer Rast- und einer Lösestellung bewegbar ist.

Die Erfindung geht also von dem im Stand der Technik bekannten Weg der Verwendung von Schiebern und separaten Rastelementen ab und macht sich die vorteilhafte Schwenklagerung des Handhabungselementes zunutze. Das Rastelement ist vorteilhaft am Handhabungselement direkt angeordnet, stellt also kein separates Teil mehr da, weshalb auch hieraus neben den sich aus der einfachen Schwenkbarkeit ergebenden Vorzügen besondere Vorteile ergeben. Denn das Handhabungselement wird einfachst vollständig unter Lösen der Arretierung verschwenkt, so daß die Einzelrohre gegeneinander verschiebbar sind, und wird durch die Wirkung der Rückstellkraft in die Raststellung bei Lösen der zum Verschwenken aufzuwendenden Kraft gebracht. Auf diese Weise ist ein äußerst einfach handzuhabendes wie herzustellendes System realisiert, das die eingangs beschriebenen Nachteile nicht mehr aufweist.

Im Rahmen einer ersten Erfindungsalternative kann vorgesehen sein, daß das Handhabungselement als das Außenrohr um mehr als den halben Umfang umgreifende, geschlitzte Schelle ausgebildet ist, die einen das Außenrohr umgreifenden, in einem mehr als den halben Umfang umgreifenden Bereich an die Außenwandung des Außenrohres anlegbaren und das Rastelement tragenden ersten Abschnitt und einen zum Schwenken zu betätigenden zweiten Abschnitt aufweist, wobei der erste Abschnitt derart elastisch ausgebildet ist, daß bei Betätigen des zweiten Abschnitts der dabei bezüglich der Außenwandung des Außenrohres bewegte erste Abschnitt unter Erzeugung einer Rückstellkraft vorspannbar ist. Diese vorteilhafte Lösung verwendet lediglich ein einziges Element, nämlich die Schelle, die das Außenrohr umgreift und durch ihre konkrete Ausbildung und Eigenelastizität unter Erzeugen einer Rückstellkraft vorspannbar ist, so daß keine weiteren Elemente mehr erforderlich sind. Dabei hat es sich als zweckmäßig erwiesen, wenn der Innendurchmesser zumindest eines Teilbereichs des ersten Abschnitts nur unwesentlich größer als der Außendurchmesser des Außenrohres gewählt ist, und wenn der zweite Abschnitt, gegebenenfalls bereits ein mit dem zweiten Abschnitt verbundener Bereich des ersten Abschnitts, bezüglich des ersten Abschnitts, gegebenenfalls dessen Teilbereichs gewinkelt angeordnet ist. Aufgrund dieser winkligen Ausbildung des Handhabungselementes ist eine einfache Verschwenkmöglichkeit mit lediglich einem einzigen am Außenrohr anzubringenden Teil, nämlich dem Handhabungselement selbst realisiert, da bedingt durch die im Durchmesser entsprechend bemessene Ausbildung des ersten Abschnitts dieser das Außenrohr umgreift, so daß der zweite Abschnitt entsprechend vom Außenrohr absteht und mühelos betätigt werden kann.

In weiterer Erfindungsausgestaltung können Mittel zum axialen und/oder verdrehsicheren Festlegen der Schelle bezüglich des Außenrohres vorgesehen sein, die zum einen als Rastmittel ausgebildet sein können, umfassend einen an der Innenwandung der Schelle, insbesondere im Bereich des ersten Abschnitts ausgebildeten Rastvorsprung und eine am Außenrohr ausgebildete Rasteintiefung, welche es ermöglichen, daß die Schelle sowohl axial als auch verdrehsicher festgelegt ist, wobei zum verdrehsicheren Festlegen die Rasteintiefung letztlich allseitig geschlossen ausgebildet ist. Zusätzlich oder insbesondere für den Fall, daß die Rasteintiefung beispielsweise als am Außenrohr mantelseitig umlaufende Rastnut ausgebildet ist, können die Mittel eine am Außenrohr vorgesehene, vom Rastelement durchsetzte Ausnehmung oder Durchbrechung aufweisen, wobei insbesondere die Durchbrechungs-Lösung von Vorteil ist, als dann die vorgenannten Mittel, nämlich der an der Innenwandung der Schelle ausgebildete Rastvorsprung und die ihm zugeordnete Rasteintiefung, entfallen können, da bedingt durch die allseitig geschlossene, vom Rastelement durchsetzte Durchbrechung ein vollumfängliches Haltern gewährleistet ist. Das Rastelement selbst ist zweckmäßig an der Innenwandung der Schelle vorspringend angeordnet.

Zur Erhöhung der Rückstellkraft kann in weiterer Erfindungsausgestaltung ein bei Betätigung des zweiten Abschnitts betätigtes elastisches Element, vorzugsweise ein Feder- oder Gummielement vorgesehen sein, welches zweckmäßig am Außenrohr im Bereich des zweiten Abschnitts oder am zweiten Abschnitt selbst, zum Außenrohr weisend, angeordnet ist, da der zweite Abschnitt vom Außenrohr ohnehin beabstandet ist. Ist die Schelle aber mit ihrem ersten Abschnitt nicht unmittelbar nicht voll aufliegend am Außenrohr angeordnet, sondern auf einem geeigneten Lagerblock oder dergleichen, kann das elastische Element natürlich auch im Bereich des ersten Abschnitts vorgesehen sein.

Eine weitere Erfindungsalternative sieht vor, daß das Handhabungselement als am Außenrohr gegebenenfalls lösbar anbringbarer Hebelarm ausgebildet ist, dem zur Erzeugung einer Rückstellkraft ein bei Betätigung des Hebelarms betätigtes elastisches Element zugeordnet ist. Dieses elastische Element kann, am Außenrohr oder am Hebelarm angeordnet, sich zwischen dem Hebelarm und dem Außenrohr erstrecken. Alternativ hierzu ist auch denkbar, daß der Hebelarm mittels eines in eine am Außenrohr ausgebildete Rastausnehmung einrastbaren Rastfußes oder dergleichen am Außenrohr befestigbar ist, wobei der Rastfuß, das elastische Element bildend, derart elastisch ausgebildet ist, daß bei Verschwenken des Hebelarms die Rückstellkraft erzeugt wird. Zweckmäßigerweise kann in diesem Fall ein weiteres elastisches Element, vorzugsweise ein Feder- oder Gummielement vorgesehen sein, welches sich zwischen dem Hebelarm und dem Außenrohr erstreckt und bei Betätigung des Hebelarms betätigt wird.

Insbesondere für den Fall, daß die Rohre aus Kunststoff sind, hat es sich als zweckmäßig erwiesen, wenn die am Innenrohr ausgebildeten Rasteintiefungen als umlaufende Rastnuten ausgebildet sind, wobei alternativ hierzu wie auch in dem Fall, daß die Rohre aus Metall sind, die am Innenrohr ausgebildeten Rasteintiefungen in ihren Abmessungen begrenzt und im wesentlichen den Abmessungen des Rastelements entsprechend ausgebildet sind, insbesondere in Form von Rastkerben.

Da bei der Handhabung die Saugdüse, die in der Regel beweglich am Innenrohr angeordnet ist, durch entsprechendes Verdrehen des gesamten Saugrohres in ihrer Richtung gesteuert wird, ist es zweckmäßig, wenn Mittel zum Verhindern eines Verdrehens der Rohre zueinander vorgesehen sind, welche in einer Ausführungsform in bekannter Weise als am Innenrohr ausgebildete, in Längsrichtung verlaufende Nut ausgeführt sein können, in welche eine geeignete Komplementärnase am Außenrohr oder an einer zwischen Innen- und Außenrohr angeordneten Einlage, z. B. Filz eingreift und so ein Verdrehen verhindert. Alternativ hierzu kann vorgesehen sein, daß die Mittel eine an der Außenwandung des Innenrohres in axialer Richtung verlaufende, die Rasteintiefungen miteinander verbindende Nut und eine am Rastelement ausgebildeten, in die Nut eingreifenden Nutzapfen umfassen, wobei die Tiefe der Nut größer als die Tiefe der Rastausnehmungen ist und derart bemessen ist, daß der in seiner Länge entsprechend bemessene Nutzapfen sowohl in der Rast- wie in der Lösestellung des Rastelements in die Nut eingreift.

Zweckmäßigerweise ist das Handhabungselement aus Kunststoff oder aus Metall gebildet.

Weitere Vorteile, Merkmale und Einzelheiten der Erfindung ergeben sich aus den im folgenden beschriebenen Ausführungsbeispielen sowie anhand der Zeichnungen. Dabei zeigen:
Fig. 1 eine ausschnittsweise Ansicht des erfindungsgemäßen Saugrohres mit Blick auf das Handhabungselement,
Fig. 2 einen Längsschnitt durch das Saugrohr aus Fig. 1,
Fig. 3 eine Querschnittsansicht durch das Saugrohr aus Fig.1 in Richtung der Linie III-III,
Fig. 4 eine Ansicht entsprechend Fig. 3, wobei das Handhabungselement in die Lösestellung gebracht ist,
Fig. 5 einen Längsschnitt durch eine weitere erfindungsgemäße Ausführungsform,
Fig. 6 eine Aufsicht auf das Innenrohr mit die Rasteintiefungen verbindender Längsnut,
Fig.7 eine Schnittansicht durch ein Saugrohr einer weiteren Ausführungsform mit am Rastelement ausgebildetem Rastzapfen, und
Fig. 8 eine weitere Ausführungsform mit einem als Hebelarm ausgebildeten Handhabungselement.

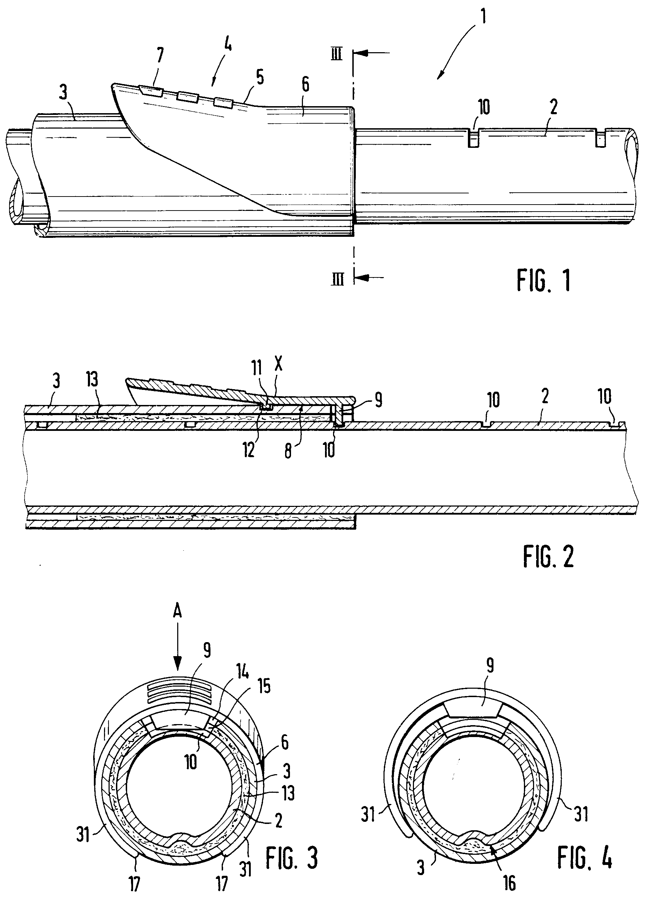

Fig. 1 zeigt in ausschnittsweiser Ansicht ein erfindungsgemäßes Saugrohr 1 für einen Staubsauger, umfassend ein Innenrohr 2, das in einem Außenrohr 3 teleskopierbar aufgenommen ist. Um die beiden Rohre 2, 3 in der jeweiligen Stellung zueinander festzulegen, ist ein Handhabungselement 4 in Form einer Schelle 5 vorgesehen. Diese Schelle 5 weist einen ersten Abschnitt 6 auf, welcher querschnittlich, vergleiche Fig. 3, im wesentlichen zylinderförmig und mit seinem Innendurchmesser nur unwesentlich größer als der Außendurchmesser des Außenrohres 3 gewählt ist. Die Schelle 5 ist geschlitzt, das heißt, der erste Abschnitt 6 bildet quasi zwei das Außenrohr 3 um mehr als den halben Umfang umgreifende Seitenarme 31 aus. Dem ersten Abschnitt 6 ist ein zweiter Abschnitt 7 zugeordnet, welcher zur Betätigung des Handhabungselementes und zum Bringen von einer Raststellung (Fig. 1 bzw. Fig. 3) in eine Lösestellung (Fig. 4) zu betätigen ist.

Fig. 1 zeigt einen Längsschnitt durch das in Fig. 1 gezeigte Saugrohr 1. An der Innenwandung 8 der Schelle 5 und im Bereich des ersten Abschnitts 6 ist zum einen ein Rastelement 9 einstückig angeformt, welches zum Eingreifen in am Innenrohr ausgebildete Rasteintiefungen 10, die im gezeigten Ausführungsbeispiel allseitig geschlossen sind, ausgebildet ist. Dieses Rastelement 9 wird durch Betätigung des zweiten Abschnitts 7 zwischen einer Raststellung und einer Lösestellung bewegt, da mit Betätigen des zweiten Abschnitts 7 der erste Abschnitt 6 von seiner quasi auf dem Außenrohr aufliegenden Stellung in eine davon gelöste Stellung gebracht wird, wodurch auch das Rastelement 9 außer Eingriff mit der jeweiligen Rasteintiefung 10 gebracht wird. Um im gezeigten Beispiel die Schelle 5 axial am Außenrohr 3 festzulegen, insbesondere dann, wenn sie in die Lösestellung gebracht ist, ist an der Innenwandung 8 ein Rastvorsprung 11 einstückig angeformt, welcher in eine am Außenrohr 3 angebrachte Rasteintiefung 12 eingreift. Diese Rastverbindung ermöglicht es, daß die Schelle 5 am Außenrohr unverschiebbar festgelegt ist.

Die Fig. 3 und 4 zeigen nun die Wirkungsweise des Handhabungselementes. Fig. 3 zeigt dabei eine Schnittansicht auf die unbetätigte Schelle in Richtung der Linie III-III aus Fig. 1. Ersichtlich liegt der erste Abschnitt 6 mit seinen Seitenarmen 31 quasi vollflächig am Umfang des Außenrohres 3 auf. Zwischen dem Außenrohr 3 und dem Innenrohr 2 ist zur Führung der beiden Rohre eine Zwischenlage 13 aus Papierfilz oder dergleichen eingebracht. In der Aufsicht wird ferner die Ausbildung des Rastelements 9, das hier als Vorsprung ausgebildet ist, ersichtlich. Dieses befindet sich in der Raststellung, in welcher es in die Rasteintiefung 10 eingreift. Damit es in diese eingreifen kann, ist endseitig am Außenrohr 3 wie auch an der Zwischenlage 13 eine entsprechende Ausnehmung 14, 15 ausgebildet, durch welche das Rastelement hindurchgreifen und in die Rasteintiefung 10 gelangen kann. Diese Ausnehmungen 14, 15, die ein Verdrehen verhindern, können dann entfallen, wenn das Rastelement 9 in vorgezogener Stellung angeordnet ist und sich quasi in einem Bereich entfernt vom Außenrohr befindet.

Fig. 4 zeigt die Schelle 4 in der Lösestellung, in welcher die Arretierung aufgehoben ist und die Rohre 2, 3 beweglich zueinander sind. In diese Lösestellung ist die Schelle 4 dadurch bringbar, daß der zweite Abschnitt in Richtung Pfeils A nach unten auf das Außenrohr 3 gedrückt wird. Dies bewirkt, daß der erste Abschnitt 6 um die Schwenkachse X, die bedingt durch die Ausführung der Schelle 4 im Bereich des Rastvorsprungs 11 liegt, zumindest mit seinem vorderen, das Rastelement 9 tragenden Bereich nach oben geschwenkt wird in die in Fig. 4 gezeigte Stellung. Hierbei wird das Rastelement 9 aus seinem Eingriff mit der Rasteintiefung 10 gebracht, so daß die Rohre 2, 3, die durch die an sich bekannte Verdrehsicherung 16 zueinander unverdrehbar gehaltert sind, in Längsrichtung auseinander oder ineinander geschoben werden können. Mit dem Verschwenken des ersten Abschnitts 6 werden gleichzeitig die beiden Seitenarme 31, die zumindest in ihren unteren Endbereichen 17 auch während des Verschwenkens an der Außenwandung des Außenrohres 3 anliegen, längs dieser bewegt. Infolge des in dieser Bewegungsrichtung zunehmenden Durchmessers des Außenrohres werden die Seitenarme 31 der Schelle 5 auseinandergedrückt, wodurch bedingt durch die elastische Ausbildung der Schelle 5, die bevorzugt aus Kunststoff gebildet ist, die Rückstellkraft erzeugt wird. Das heißt, der erste Abschnitt wird vorgespannt. Diese Rückstellkraft ermöglicht es, daß nach Lösen der auf den zweiten Abschnitt 7 wirkenden Kraft die Schelle automatisch wieder in ihre in Fig. 3 gezeigte Raststellung gezogen wird, da die Rückstellkraft den ersten Abschnitt in diese drängt. Durch diese erfindungsgemäße Ausbildung der Schelle 5 wird mit nur einem einzigen Zusatzelement zu den Rohren 2, 3 ein vollumfänglicher und halbautomatisch wirkender Teleskopier-Rastmechanismus geschaffen, der in seiner Einfachheit wie auch Handhabbarkeit sich gegenüber dem Stand der Technik auszeichnet.

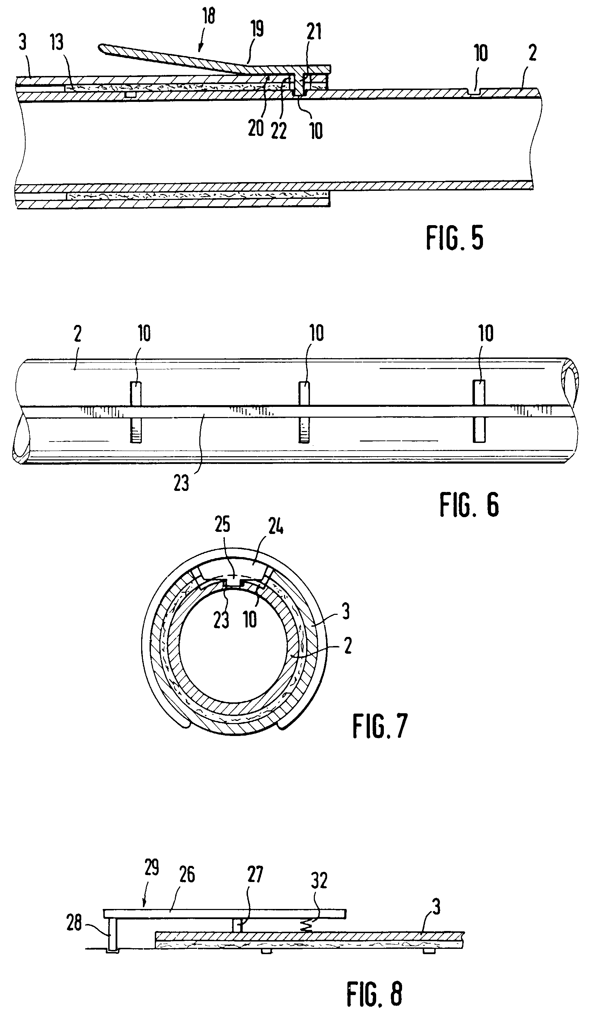

Eine weitere Ausführungsform des Handhabungselements, das im wesentlichen dem bezüglich der Fig. 1 bis 4 beschriebenen entspricht, zeigt Fig. 5. Auch bei diesem Handhabungselement 18, das ebenfalls in Form einer Schelle 19 ausgebildet ist, ist an der Innenwandung 20 das Rastelement 21 angeformt. Diese Ausführungsform verzichtet jedoch auf das bei der vorbeschriebenen vorgesehene und den Rastvorsprung 11 und die Rasteintiefung 12 umfassende Mittel zum Festlegen, vielmehr wird eine vollumfängliche axiale wie verdrehsichere Festlegung allein mittels des Rastelements 21 realisiert. Dies deshalb, da das Außenrohr 3 mit einer Durchbrechung 22 versehen ist, welche sich durch die Zwischenlage 13 fortsetzt. Diese Durchbrechung 22 wird vom Rastelement 21 durchsetzt, welche in die Rasteintiefungen 10 eingreifen kann. Da das Rastelement 21 auch in der Lösestellung nicht außer Eingriff mit der Durchbrechung 22 gerät, wird auf diese Weise für eine hinreichende Lagefixierung gesorgt.

Eine weitere Ausführungsform ist in den Fig. 6 und 7 wiedergegeben. Bei dieser Ausführungsform wird auf die in Fig. 4 gezeigte Verdrehsicherung 16 verzichtet, vielmehr ist die Verdrehsicherung integriert im oberseitigen Rastmechanismus ausgebildet. Zu diesem Zweck ist eine am Innenrohr 2 in Längsrichtung verlaufende Nut 23 vorgesehen, welche die einzelnen Rasteintiefungen 10 miteinander verbindet. Die Tiefe dieser Nut 23 ist, vgl. Fig. 7, tiefer bemessen als die Rasteintiefungen 10. Am Rastelement 24 dieser Ausführungsform ist desweiteren ein Nutzapfen 25 angeformt, welcher in die Nut 23 eingreift. Die Tiefe der Nut 23 wie auch die Länge des Nutzapfens 25 sind dabei derart bemessen, daß der Nutzapfen 25 stets in Eingriff mit der Nut 23 steht, auch wenn das Rastelement in die Lösestellung gebracht wurde, das heißt, wenn das Rastelement 24 außer Eingriff mit der Rasteintiefung 10 steht.

Schließlich zeigt Fig. 8 eine weitere Ausführungsform des Handhabungselements. Dieses besteht aus einem Hebelarm 26, welcher an einem geeigneten Lagerblock 27 oder dergleichen um eine Schwenkachse verschwenkbar gelagert ist. Am Hebelarm 26 ist das Rastelement 28 vorspringend angeordnet. Auf der gegenüberliegenden Seite ist zwischen dem Außenrohr 3 und dem Hebelarm 26 ein elastisches Element 32 in Form einer Schraubenfeder geordnet, welches zur Erzeugung der Rückstellkraft dient, die den Hebelarm 26 stets in die Raststellung drängt. Sofern die Befestigung am Lagerblock 27 elastisch ausgebildet ist, das heißt, wenn die Befestigung des Hebelarms 26 hieran bereits eine hinreichend elastische Bewegung unter Erzeugung einer Rückstellkraft ermöglicht, kann auf das elastische Element 32 auch verzichtet werden. Dabei kann die Ausführungsform auch derart gewählt sein, daß der Lagerblock 27 einstückig mit dem Hebelarm 26 ist und an dem Außenrohr 3 entsprechend verrastet wird, unter Ermöglichung einer entsprechend elastischen Verschwenkbarkeit.

## Patentansprüche

1. Teleskopierbares Saugrohr für Staubsauger, bestehend aus zwei ineinander verschiebbaren Rohren, wobei das Innenrohr mehrere in Achsrichtung voneinander beabstandete Rasteintiefungen aufweist, in die zum Arretieren der Rohre zueinander unter Betätigung eines am Außenrohr angeordneten Handhabungselements ein Rastelement lösbar einrastbar ist, dadurch gekennzeichnet, daß das Handhabungselement (4, 18, 29) am Außenrohr (3) gegen die Wirkung einer Rückstellkraft derart hebelartig schwenkbar angeordnet ist, daß das am Handhabungselement (4, 18, 29) angeordnete Rastelement (9, 21, 24, 28) bei Betätigung des Handhabungselements (4, 18, 29) reversibel zwischen einer Rast- und einer Lösestellung bewegbar ist.

2. Saugrohr nach Anspruch 1, dadurch gekennzeichnet, daß das Handhabungselement (4, 18) als das Außenrohr (3) um mehr als den halben Umfang umgreifende, geschlitzte Schelle (5, 19) ausgebildet ist, die einen das Außenrohr (3) umgreifenden, in einem mehr als den halben Umfang umgreifenden Bereich an die Außenwandung des Außenrohres (3) anlegbaren und das Rastelement (9, 21, 24) tragenden ersten Abschnitt (6) und einen zum Schwenken zu betätigenden zweiten Abschnitt (7) aufweist, wobei der erste Abschnitt (6) derart elastisch ausgebildet ist, daß bei Betätigen des zweiten Abschnitts (7) der dabei bezüglich der Außenwandung des Außenrohres bewegte erste Abschnitt (7) unter Erzeugung einer Rückstellkraft vorspannbar ist.

3. Saugrohr nach Anspruch 2, dadurch gekennzeichnet, daß der Innendurchmesser zumindest eines Teilbereichs des ersten Abschnitts (6) nur unwesentlich größer als der Außendurchmesser des Außenrohres (3) gewählt ist, und daß der zweite Abschnitt (7), gegebenenfalls bereits ein mit dem zweiten Abschnitt verbundener Bereich des ersten Abschnitts, bezüglich des ersten Abschnitts (6), gegebenenfalls dessen Teilbereichs gewinkelt angeordnet ist.

4. Saugrohr nach Anspruch 2 oder 3, dadurch gekennzeichnet, daß Mittel zum axialen und/oder verdrehsicheren Festlegen der Schelle (5) bezüglich des Außenrohres (3) vorgesehen sind.

5. Saugrohr nach Anspruch 4, dadurch gekennzeichnet, daß die Mittel zum axialen und/oder verdrehsicheren Festlegen als Rastmittel ausgebildet sind, umfassend einen an der Innenwandung (8) der Schelle (5), insbesondere im Bereich des ersten Abschnitts (6) ausgebildeten Rastvorsprung (11) und eine am Außenrohr (3) ausgebildete Rasteintiefung (12).

6. Saugrohr nach Anspruch 4 oder 5, dadurch gekennzeichnet, daß die Mittel zum axialen und/oder verdrehsicheren Festlegen eine am Außenrohr (3) vorgesehene, vom Rastelement (9, 21) durchsetzte Ausnehmung (14) oder Durchbrechung (22) aufweisen.

7. Saugrohr nach einem der Ansprüche 2 bis 6, dadurch gekennzeichnet, daß das Rastelement (9, 21, 24) an der Innenwandung der Schelle (5) vorspringend angeordnet ist.

8. Saugrohr nach einem der Ansprüche 2 bis 7, dadurch gekennzeichnet, daß zur Erhöhung der Rückstellkraft ein bei Betätigung des zweiten Abschnitts betätigtes elastisches Element, vorzugsweise ein Feder- oder Gummielement vorgesehen ist.

9. Saugrohr nach 8, dadurch gekennzeichnet, daß das elastische Element am Außenrohr im Bereich des zweiten Abschnitts oder am zweiten Abschnitt selbst, zum Außenrohr weisend, angeordnet ist.

10. Saugrohr nach Anspruch 1, dadurch gekennzeichnet, daß das Handhabungselement (29) als am Außenrohr (3) gegebenenfalls lösbar anbringbarer Hebelarm (26) ausgebildet ist, dem zur Erzeugung einer Rückstellkraft ein bei Betätigung des Hebelarms (26) betätigtes elastisches Element (27) zugeordnet ist.

11. Saugrohr nach Anspruch 10, dadurch gekennzeichnet, daß sich das elastische Element (27), am Außenrohr (3) oder am Hebelarm (26) angeordnet, zwischen dem Hebelarm (26) und dem Außenrohr (3) erstreckt.

12. Saugrohr nach Anspruch 10, dadurch gekennzeichnet, daß der Hebelarm mittels eines in eine am Außenrohr ausgebildete Rastausnehmung einrastbaren Rastfußes o.dgl. am Außenrohr befestigbar ist, wobei der Rastfuß, das elastische Element bildend, derart elastisch ausgebildet ist, daß bei Verschwenken des Hebelarms die Rückstellkraft erzeugt wird.

13. Saugrohr nach Anspruch 12, dadurch gekennzeichnet, daß ein weiteres elastisches Element, vorzugsweise ein Feder- oder Gummielement vorgesehen ist, welches sich zwischen dem Hebelam und dem Außenrohr erstreckt und bei Betätigung des Hebelarms betätigt wird.

14. Saugrohr nach einem der vorangehenden Ansprüche, dadurch gekennzeichnet, daß die am Innenrohr ausgebildeten Rasteintiefungen als umlaufende Rastnuten ausgebildet sind.

15. Saugrohr nach einem der vorangehenden Ansprüche, dadurch gekennzeichnet, daß die am Innenrohr (2) ausgebildeten Rasteintiefungen (10) in ihren Abmessungen begrenzt und im wesentlichen den Abmessungen des Rastelements (9, 21, 24) entsprechend ausgebildet sind, insbesondere in Form von Rastkerben.

16. Saugrohr nach einem der vorangehenden Ansprüche, dadurch gekennzeichnet, daß Mittel zum Verhindern eines Verdrehens der Rohre zueinander vorgesehen sind.

17. Saugrohr nach Anspruch 16, dadurch gekennzeichnet, daß die Mittel eine an der Außenwandung des Innenrohres (2) in axialer Richtung verlaufende, die Rasteintiefungen (10) miteinander verbindende Nut (23) und einen am Rastelement (24) ausgebildetet, in die Nut (23) eingreifenden Nutzapfen (25) umfassen, wobei die Tiefe der Nut (23) größer als die Tiefe der Rasteintiefungen (10) ist und derart bemessen ist, daß der in seiner Länge entsprechend bemessene Nutzapfen (25) sowohl in der Rast- wie in der Lösestellung des Rastelements (24) in die Nut (23) eingreift.

18. Saugrohr nach einem der vorangehenden Ansprüche, dadurch gekennzeichnet, daß das Handhabungselement (4, 18, 29) aus Kunststoff oder aus Metall besteht.
